# EUROPÄISCHE PATENTANMELDUNG

(11) **EP 0 855 812 A2**
(43) Veröffentlichungstag der Anmeldung: **29.07.1998**
(21) Anmeldenummer: 97118906.3
(22) Anmeldetag: 30.10.1997
(51) Int. Cl.: H04B 10/22

(54) **Kopplungsadapter für Kopplungsvorrichtung an Raumfahrzeugen**

(30) Priorität: 22.01.1997 DE 19701952
(71) Anmelder: Daimler-Benz Aerospace Aktiengesellschaft, 80995 München (DE)
(72) Erfinder: Schmidt, Gernot, 28215 Bremen (DE)
(74) Vertreter: Hansmann, Dierk, Dipl.-Ing.

(57) **Zusammenfassung**

Es wird ein Datenübertragungssystem für eine Kopplungsvorrichtung an zu verkoppelnden Raumfahrzeugen beschrieben, das sich dadurch auszeichnet, daß eine Infrarotübertragungsstrecke mit mindestens einem Infrarot-Sende- und mindestens einem Infrarot-Empfangselement zum Übertragen von Datensignalen zwischen den Raumfahrzeugen vorgesehen ist.

## Beschreibung

Die Erfindung betrifft Kopplungsadapter einer Kopplungsvorrichtung von zu verkoppelnden Raumfahrzeugen, mit einem Datenübertragungssystem.

Bemannte und unbemannte Raumfahrzeuge, die auf erdnahen oder geostationären Umlaufbahnen die Erde umkreisen, müssen zum Austausch von Astronauten, zur Versorgung mit Material, zu Wartungszwecken, oder auch zur orbitalen Integration größerer Raumfahrtsysteme miteinander gekoppelt werden.

Die hierfür notwendigen Näherungsmanöver, Rendezvousstrategien, sowie die spezifischen Anforderungen an die Kopplungsvorrichtungen werden z.B. von Marchal et al. in "Preliminary Design of an Operational Rendezvous and Docking Subsystem" der "International Astronautik Federation" (IAF) aus dem Jahre 1984 (84-36), beschrieben.

Ferner können Kopplungsvorgänge nach Erreichen eines sicheren Kopplungskorridors auch durch Manipulatoren wie z.B. dem geplanten "Space Station Remote Manipulator System" durchgeführt werden.

In jedem Fall ist die Auslegung der Kopplungsvorrichtung von besonderer Bedeutung. Zur Schaffung einer flugdynamisch stabilen Einheit muß mit der Kopplungsvorrichtung einerseits eine sichere und stabile mechanische Verbindung beider Raumfahrzeuge hergestellt und aufrechterhalten werden. Andererseits müssen Verbindungen für die elektrische Energieübertragung, für einen Druckausgleich zwischen den Raumfahrzeugen, für Fluidtransfer sowie für die Kommunikation und Datenübertragung geschaffen werden.

Für die Datenübertragung werden spezifische elektrische Steckverbinder eingesetzt, die beim Kopplungsvorgang hohen mechanischen Beanspruchungen ausgesetzt sind. Ferner müssen diese Steckverbinder integraler Bestandteil der Kopplungsvorrichtung, d.h. des Kopplungsadapters sein, damit die erforderlichen hohen Kontaktkräfte aufgebracht werden können und eine hochgenaue Positionierung der Kontakte zueinander gewährleistet ist. Infolge der Notwendigkeit dieser hochgenauen Positionierung der Kontaktgabe sind auch die Anforderungen an die Positioniergenauigkeit der Kopplungsvorrichtung beider Raumschiffe hoch, so daß sehr komplexe und aufwendige Systeme erforderlich sind.

Ferner ist es bekannt, eine kontaktlose Datenübertragung im UHF- und Mikrowellenbereich vorzunehmen. Aufgrund der hohen Feldstärken des Nutzsignals entstehen hierbei jedoch häufig Probleme mit der elektromagnetischen V erträglichkeit (EMV) mit anderen Systemen der gekoppelten Raumfahrzeuge.

Der Erfindung liegt deshalb die Aufgabe zugrunde, Kopplungsadapter für eine Kopplungsvorrichtung an zu verkoppelnden Raumfahrzeugen, mit einem Datenübertragungssystem, zu schaffen, die einfacher und kostengünstiger zu realisieren sind.

Gelöst wird diese Aufgabe mit Kopplungsadaptern der eingangs genannten Art, die eine Infrarotübertragungsstrecke aufweisen, die in die Kopplungsadapter integriert ist und die mindestens ein Infrarot-Sende- und mindestens ein Infrarot-Empfangselement zum Übertragen von Datensignalen zwischen den Raumfahrzeugen aufweisen.

Diese Lösung hat wesentliche Vorteile:
a) Einerseits brauchen nun nicht mehr so hohe Anforderungen an die Positioniergenauigkeit der Kopplungsvorrichtung gestellt zu werden, da keine Kontakte zu schließen sind, sondern die Datenübertragung über Infrarotsignale erfolgt. Die Möglichkeit der Vereinfachung der Kopplungsvorrichtung und der Wegfall mechanischer Kontakte führt zu einer wesentlichen Kostenreduzierung. Außerdem können nun auch anderer konstruktive Schwerpunkte, wie zum Beispiel eine Optimierung im Hinblick auf die Kraftschlüssigkeit gesetzt werden.
b) Weiterhin ist gegenüber bekannten Kopplungsadaptern ein Datenaustausch nicht nur dann möglich, wenn die Raumfahrzeuge miteinander verkoppelt sind, sondern schon dann, wenn sie sich im gegenseitigen Nahbereich befinden, d.h. entweder in einer Phase unmittelbar vor der Kopplung oder unmittelbar nach der Trennung. Dies eröffnet neue Möglichkeiten bei der Organisation der Näherungsmanöver und Rendezvousstrategien.
c) Schließlich ist es nun auch möglich, die Datenübertragung durch Änderung der Software des Flugrechners zu konfigurieren. Bei den üblichen Steckverbindern ist dies aufgrund der festen Pinbelegung und Zuordnung bestimmter Funktionen nicht realisierbar.

Die Infrarotübertragungsstrecke muß nicht notwendigerweise integraler Bestandteil der Kopplungsadapter oder der Kopplungsvorrichtung sein, sondern kann auch gegenüber diesen abgesetzt angeordnet werden.

Vorteilhafte Weiterbildungen der Erfindung sind in den Unteransprüchen beschrieben.

Danach kann an jedem der Kopplungsadapter einer Kopplungsvorrichtung jeweils ein Infrarot-Sende- und ein Infrarot-Empfangselement zur bidirektionalen Übertragung der Datensignale vorgesehen sein.

Die Infrarot-Sende- und Infrarot-Empfangselemente können räumlich getrennt von den Kopplungsadaptern montiert sein.

Die Infrarotübertragungsstrecke kann mindestens einen Infrarot-Umsetzer zur Erhöhung der Reichweite aufweisen.

Die Infrarot-Empfangselemente der Kopplungsadapter können zur Erhöhung der Störsicherheit optisch selektiv so gewählt sind, daß sie gegen Sonnenlicht weitgehend unempfindlich sind.

Die Infrarotsignale können durch die Datensignale trägerfrequenzmodulierbar sein.

Die Datensignale können auch in Form von fehlerkorrigierten Bitcodes übertragbar sein.

Weitere Einzelheiten, Merkmale und Vorteile der Erfindung ergeben sich aus der nachfolgenden Beschreibung von bevorzugten Ausführungsformen anhand der Zeichnung. Es zeigt:
Figur 1 eine erste Ausführungsform der Erfindung,
Figur 2 eine zweite Ausführungsform der Erfindung und
Figur 3 eine dritte Ausführungsform der Erfindung.

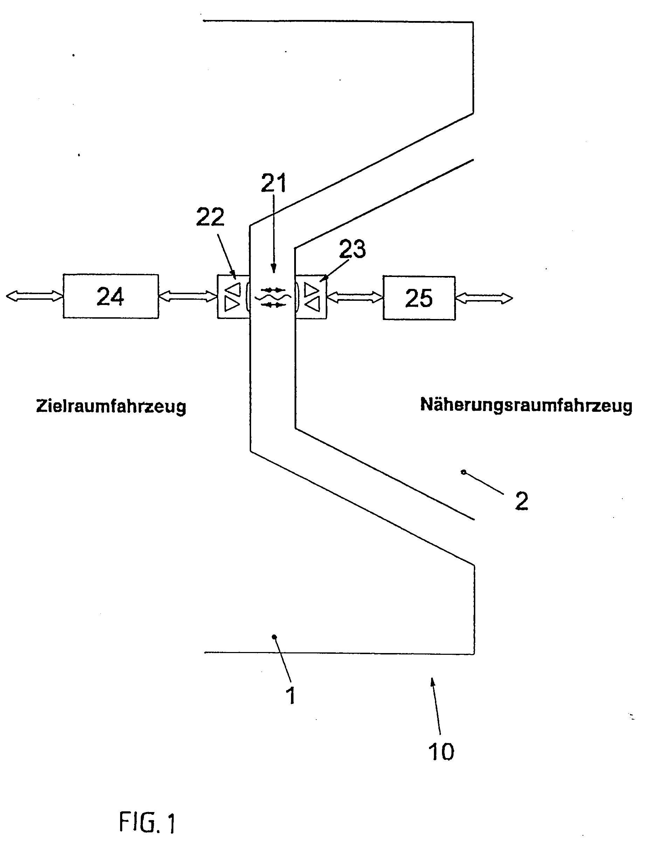

Gleiche Elemente sind in den Figuren jeweils mit gleichen Bezugsziffern bezeichnet. In den Figuren 1 bis 3 ist jeweils eine Kopplungsvorrichtung 10 zu erkennen, die im wesentlichen aus einem ersten, an einem Ziel-Raumfahrzeug vorhandenen Kopplungsadapter 1 und einem zweiten, an dem Näherungs-Raumfahrzeug vorhandenen Kopplungsadapter 2 besteht. Die Kopplungsvorrichtung 10 befindet sich jeweils in gekoppeltem Zustand, in dem die beiden Raumfahrzeuge miteinander verbunden sind.

In die Kopplungsadapter 1, 2 der Kopplungsvorrichtung 10 ist gemäß Figur 1 ein erfindungsgemäßes Datenübertragungssystem integriert. Dieses System weist eine Infrarotübertragungsstrecke 21 mit jeweils einem kombinierten Infrarot-Sende- und Empfangselement 22, 23 mit einer Mehrzahl von Sende- und Empfangsdioden an dem ersten und dem zweiten Kopplungsadapter 1, 2 der Kopplungsvorrichtung 10 zur Übertragung von Datensignalen zwischen den Raumfahrzeugen in bidirektionaler Richtung auf. Zur Codierung und Modulation der zu übertragenden Datensignale sowie zur Demodulation und Decodierung der empfangenen Datensignale dienen jeweils eine erste und eine zweite Signalverarbeitungseinrichtung 24, 25 in dem ersten bzw. zweiten Adapter 1, 2 der Kopplungsvorrichtung 10. Die Verarbeitung der Datensignale erfolgt in bekannter Weise.

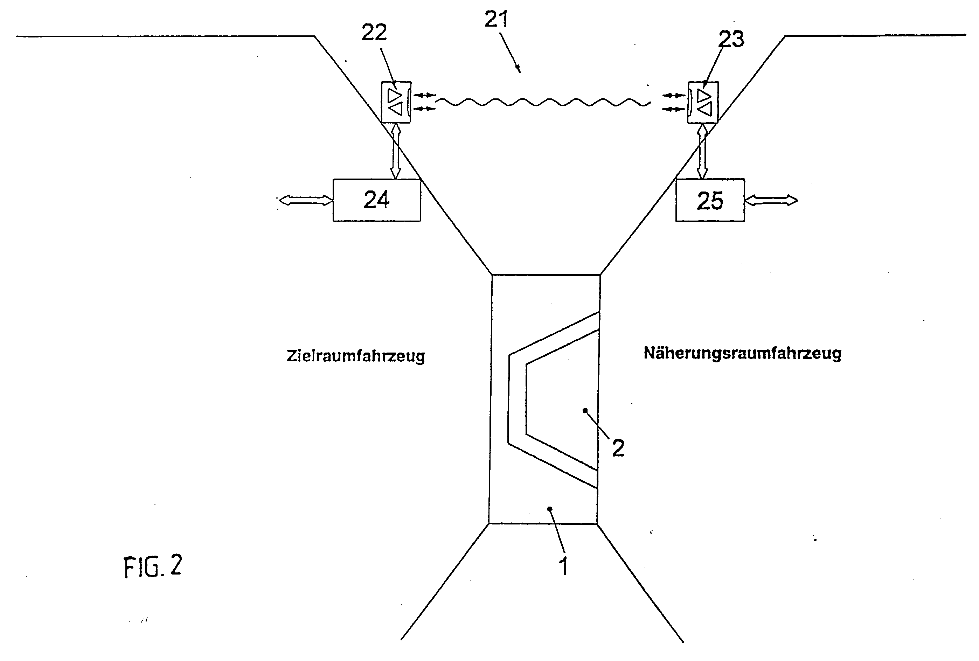

Figur 2 zeigt eine zweite Ausführungsform der Erfindung, bei der die kombinierten Infrarot-Sende- und Empfangselemente 22, 23 von den Kopplungsadaptern 1, 2 getrennt montiert ist, und zwar im Bereich von Stirnflächen der Kopplungsvorrichtung 10. Zur Codierung und Modulation der zu übertragenden Datensignale sowie zur Demodulation und Decodierung der empfangenen Datensignale dienen wiederum jeweils die erste und die zweite Signalverarbeitungseinrichtung 24, 25.

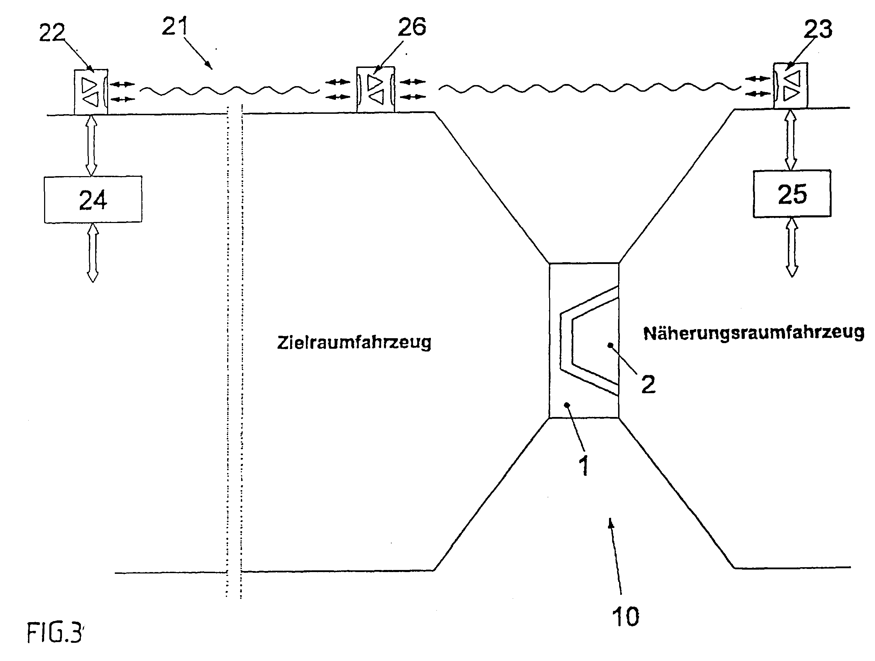

Bei der dritten Ausführungsform gemäß Figur 3 sind die kombinierten Infrarot-Sende- und Empfangselemente 22, 23 noch weiter abgesetzt. Die Positionen dieser Elemente werden - ebenso wie bei der Ausführung gemäß Figur 2 - so gewählt, daß eine möglichst gute Abschirmung von direktem oder an anderen Flächen reflektiertem Sonnenlicht oder anderer, möglicherweise störender Strahlungsquellen erreicht wird. Die erste und die zweite Signalverarbeitungseinrichtung 24, 25 dienen auch hierbei zur Codierung und Modulation der zu übertragenden Datensignale sowie zur Demodulation und Decodierung der empfangenen Datensignale.

Zur Erzielung der gemäß Figur 3 notwendigen höheren Reichweite der Infrarotübertragungsstrecke 21 ist zusätzlich ein Infrarot-Umsetzer 26 vorgesehen, der zum Verstärken und erneuten Aussenden der Infrarotsignale dient, die von den Infrarot-Sende- und Empfangselementen 22, 23 ausgesendet werden. Dadurch ist es auch möglich, Abschattungen oder Hindernisse zwischen diesen Elementen 22, 23 zu überbrücken.

Darüberhinaus kann die Reichweite der Infrarotübertragungsstrecke durch Erhöhung der Anzahl der einzelnen Sende- und Empfangsdioden in den Sende- und Empfangselementen 22, 23, ferner durch Erhöhung ihrer Empfindlichkeit, sowie durch eine verstärkte Fokussierung bzw. Bündelung vergrößert werden. Umgekehrt können durch Streuung des Infrarotlichts die Anforderungen an die Richtgenauigkeit reduziert werden.

Schließlich bestimmt auch die Art des Übertragungs- bzw. Modulationsverfahrens (z.B. Frequenzumtastung - FSK) die Störsicherheit, Reichweite und Datenübertragungsrate des Systems. Alle diese Parameter können von dem Anwender entsprechend den speziellen Anforderungen gewählt werden.

## Patentansprüche

1. Kopplungsadapter für eine Kopplungsvorrichtung von zu verkoppelnden Raumfahrzeugen, mit einem Datenübertragungssystem, gekennzeichnet durch eine Infrarotübertragungsstrecke (21), die in die Kopplungsadapter (1, 2) integriert ist und die mindestens ein Infrarot-Sende- und mindestens ein Infrarot-Empfangselement (22, 23) zum Übertragen von Datensignalen zwischen den Raumfahrzeugen aufweist.

2. Kopplungsadapter nach Anspruch 1, gekennzeichnet durch jeweils ein Infrarot-Sende- und ein Infrarot-Empfangselement (22, 23) an jedem der Kopplungsadapter (1, 2) zur bidirektionalen Übertragung der Datensignale.

3. Kopplungsadapter nach Anspruch 1 oder 2, dadurch gekennzeichnet, daß die Infrarot-Sende- und Infrarot-Empfangselemente (22, 23) räumlich getrennt von den Kopplungsadaptern (1, 2) montiert sind.

4. Kopplungsadapter nach Anspruch 3, dadurch gekennzeichnet, daß die Infrarotübertragungsstrecke (21) mindestens einen Infrarot-Umsetzer (26) zur Erhöhung der Reichweite aufweist.

5. Kopplungsadapter nach einem der vorhergehenden Ansprüche, dadurch gekennzeichnet, daß die Infrarot-Empfangselemente zur Erhöhung der Störsicherheit optisch selektiv so gewählt sind, daß sie gegen Sonnenlicht weitgehend unempfindlich sind.

6. Kopplungsadapter nach einem der vorhergehenden Ansprüche, dadurch gekennzeichnet, daß die Infrarotsignale durch die Datensignale trägerfrequenzmodulierbar sind.

7. Kopplungsadapter nach einem der vorhergehenden Ansprüche, dadurch gekennzeichnet, daß die Datensignale in Form von fehlerkorrigierten Bitcodes übertragbar sind.
